# EUROPEAN PATENT SPECIFICATION

(11) **EP 3 255 867 B1**
(45) Date of publication and mention of the grant of the patent: **03.11.2021**
(21) Application number: 16823707.1
(22) Date of filing: 10.05.2016
(51) Int. Cl.: H04M 1/02, G06F 1/16, G03B 17/54

(54) **FLEXIBLE SCREEN MOBILE TERMINAL WITH TWO BENDABLE ENDS**
BIEGSAMER BILDSCHIRM FÜR MOBILES ENDGERÄT MIT ZWEI BIEGBAREN ENDEN
TERMINAL MOBILE À ÉCRAN SOUPLE AVEC DEUX EXTRÉMITÉS PLIABLES

(30) Priority: 13.07.2015 CN 201510408467
(43) Date of publication of application: 13.12.2017
(73) Proprietor: GUANGDONG OPPO MOBILE TELECOMMUNICATIONS CORP., LTD., Wusha, Chang'an Dongguan, Guangdong 523860 (CN)
(72) Inventor: LIN, Yugui, Dongguan Guangdong 523860 (CN)
(74) Representative: Manitz Finsterwald Patent- und Rechtsanwaltspartnerschaft mbB
(86) International application number: PCT/CN2016/081500
(87) International publication number: WO 2017/008560

(56) References cited:
- EP-A1- 1 549 029
- EP-A2- 2 315 186
- EP-A2- 2 538 639
- WO-A2-2006/067640
- CN-A- 101 729 661
- CN-A- 104 750 187
- CN-A- 104 980 544
- CN-U- 204 102 028
- CN-U- 204 795 174
- US-A1- 2007 129 099
- US-A1- 2014 285 476
- US-A1- 2015 177 789

## Description

### TECHNICAL FIELD

The present invention relates to the technical field of mobile devices, further to a flexible screen mobile terminal. The features of the preamble of the independent claim are known from EP 2 315 186 A2. Related technologies are known from EP 2 538 639 A2, US 2007/129099 A1, EP 1 549 029 A1, US 2014/285476 A1 and US 2015/177789 A1.

### BACKGROUND

With the continuous development of science and technology, appearances and functions of portable electronic products such as a mobile terminal change with each passing day. Taking a mobile phone as an example, its functions have evolved from initial answering and making calls into integration of various multimedia features, in which mobile meeting and mobile television also gradually become a popular trend. However, as demands for functions of the mobile phone increases, a limited operating interface of a small portable terminal such as the mobile phone is not sufficient to satisfy the demands. In a modern electronic business, a laptop computer and a separate projector are usually required when an electronic conference is conducted. Since the laptop computer and the projector are physically separate from each other, their volume and weight lead to a great inconvenience for a user to carry and use them. Although applications of mobile meeting and mobile television may solve the above problem, it is limited because of the screen and operating interface of the mobile phone.

In the prior art, a projector phone with a projector or a similar portable electronic product with projection function has emerged. Some of projector phones have entered a stage of mass production, and corresponding products have been sold on the market. However, the prior art projector phone has deficits of inconvenience in use and unreasonable structure. During projection operation, the phone needs to be hold by a hand or fixed by a mobile phone fixed device. Holding the mobile phone by the hand will lower image stability and image quality, while the additional mobile phone fixed device will lower portable performance of the phone. In addition, angles of a camera and a micro projection module of the prior art projector phone cannot be adjusted individually and relative positions of the camera and the micro projection module are fixed, which results in that the projector phone fails to meet the electronic meeting requirements for effective projection and effective shooting implemented simultaneously.

Based on the above situation, it is necessary to design a mobile terminal, in which angles of a camera and a micro projection module can be adjusted individually.

### DISCLOSURE OF THE INVENTION

### TECHNICAL PROBLEM

One objective of the present invention is to provide a flexible screen mobile terminal, where a camera component is mounted to a first terminal auxiliary body which can be rotated individually and a micro projection module is mounted to a second terminal auxiliary body which can be rotated individually, so that angle adjustment of the camera component and the micro projection module can be implemented individually, enabling the mobile terminal to meet requirements of simultaneously outputting projection and inputting photographing.

One objective of the present invention is to provide a flexible screen mobile terminal, where a camera component is mounted to a first terminal auxiliary body which is rotatable, so that multi-angle adjustment of the camera component can be realized and flexibility of the camera component can be improved, so as to meet requirements of a user for photographing from different angles.

One objective of the present invention is to provide a flexible screen mobile terminal, where a micro projection module is mounted to a second terminal auxiliary body which is rotatable, so that multi-angle adjustment of the micro projection module can be realized and flexibility of the micro projection module can be improved, so as to meet requirements of a user for projection from different angles.

One objective of the present invention is to provide a flexible screen mobile terminal, where a terminal main body, a first terminal auxiliary body and a second terminal auxiliary body serve as a fixed support when a camera component and a micro projection module are used, which avoids inconvenience of providing fixed support additionally and improves use convenience of the camera component and the micro projection module.

One objective of the present invention is to provide a flexible screen mobile terminal, where a photographing trigger component and a projection trigger component are disposed at a position where a terminal main body is coupled to a first terminal auxiliary body and a position where the terminal main body is coupled to a second terminal auxiliary body, respectively, which omits operations of turning on and off the camera component and the micro projection module, enabling the camera component and the micro projection module to be started more quickly.

### SOLUTIONS

### TECHNICAL SOLUTIONS

The present invention is defined in the independent claim. A flexible screen mobile terminal includes:
a terminal main body, having a first main body surface for mounting a flexible screen;
a first terminal auxiliary body, disposed at one end of the terminal main body, and having a first auxiliary body surface for mounting the flexible screen;
a second terminal auxiliary body, disposed at one end of the terminal main body away from the first terminal auxiliary body, and having a third auxiliary body surface for mounting the flexible screen;
the flexible screen, lapped jointly on the first main body surface, the first auxiliary body surface and the third auxiliary body surface, wherein one end of the flexible screen is coupled to and movable relative to the first auxiliary body surface, and the other end of the flexible screen is coupled to and movable relative to the third auxiliary body surface, and wherein
and wherein the first terminal auxiliary body is relatively rotatably coupled to the terminal main body, and the second terminal auxiliary is relatively rotatably coupled to the terminal main body;
a camera component, mounted to the first terminal auxiliary body;
a micro projection module, mounted to the second terminal auxiliary body;
wherein first coupling components are disposed at a position where the terminal main body and the first terminal auxiliary body are coupled to each other, and the first coupling components are a first buckle and a first slot that mate with each other and are selectively coupled to or separated from each other; and
second coupling components are disposed at a position where the terminal main body and the second terminal auxiliary body are coupled to each other, and the second coupling components are a second buckle and a second slot that mate with each other and are selectively coupled to or separated from each other.

According to the flexible screen mobile terminal, a photographing trigger component for triggering the camera component is disposed at a position where the terminal main body and the first terminal auxiliary body are coupled to each other;
and/or, a projection trigger component for triggering the micro projection module is disposed at a position where the terminal main body and the second terminal auxiliary body are coupled to each other.

According to the flexible screen mobile terminal, one end of the screen support is coupled to and slidable relative to the first terminal auxiliary body, and the other end of the screen support is coupled to and slidable relative to the second terminal auxiliary body.

According to the flexible screen mobile terminal, outside of a frame of the screen support is coupled to the terminal main body, the first terminal auxiliary body and the second terminal auxiliary body.

According to the flexible screen mobile terminal, the camera component is mounted to the first auxiliary body surface.

According to the flexible screen mobile terminal, the micro projection module is mounted to the third auxiliary body surface.

A flexible screen mobile terminal with both ends being bendable includes:
a terminal main body, having a first main body surface for mounting a flexible screen;
a first terminal auxiliary body, disposed at one end of the terminal main body, and having a first auxiliary body surface for mounting the flexible screen;
a second terminal auxiliary body, disposed at one end of the terminal main body away from the first terminal auxiliary body, and having a third auxiliary body surface for mounting the flexible screen;
the flexible screen, lapped jointly on the first main body surface, the first auxiliary body surface and the third auxiliary body surface, wherein one end of the flexible screen is coupled to and movable relative to the first auxiliary body surface, and the other end of the flexible screen is coupled to and movable relative to the third auxiliary body surface, and
and wherein the first terminal auxiliary body is relatively rotatably coupled to the terminal main body, and the second terminal auxiliary is relatively rotatably coupled to the terminal main body;
a camera component, mounted to the first terminal auxiliary body;
a micro projection module, mounted to the second terminal auxiliary body.

According to the flexible screen mobile terminal, a photographing trigger component for triggering the camera component is disposed at a position where the terminal main body and the first terminal auxiliary body are coupled to each other;
and/or, a projection trigger component for triggering the micro projection module is disposed at a position where the terminal main body and the second terminal auxiliary body are coupled to each other.

According to the flexible screen mobile terminal, a screen support for supporting the flexible screen is disposed outside of the flexible screen, one end of the screen support is coupled to and slidable relative to the first terminal auxiliary body, and the other end of the screen support is coupled to and slidable relative to the second terminal auxiliary body.

According to the flexible screen mobile terminal, the flexible screen is disposed inside of a frame of the screen support, and outside of the frame of the screen support is coupled to the terminal main body, the first terminal auxiliary body and the second terminal auxiliary body.

According to the flexible screen mobile terminal, the camera component is mounted to the first auxiliary body surface.
According to the flexible screen mobile terminal, a first cover portion overlapped with the flexible screen selectively is mounted to the first auxiliary body surface of the first terminal auxiliary body, wherein the camera component is mounted to the first cover portion of the first auxiliary body surface and selectively hidden between the first terminal auxiliary body and the flexible screen.

According to the flexible screen mobile terminal, the micro projection module is mounted to the third auxiliary body surface.

According to the flexible screen mobile terminal, a second cover portion overlapped with the flexible screen selectively is mounted to the third auxiliary body surface of the second terminal auxiliary body, and the micro projection module is mounted to the second cover portion of the third auxiliary body surface and selectively hidden between the second terminal auxiliary body and the flexible screen.

### BENEFICIAL EFFECTS OF THE PRESENT INVENTION

### BENEFICIAL EFFECTS

(I) A flexible screen mobile terminal is provided, where a camera component is mounted to a first terminal auxiliary body which can be rotated individually, and a micro projection module is mounted to a second terminal auxiliary body which can be rotated individually, so that angle adjustment of the camera component and the micro projection module can be implemented individually, enabling the mobile terminal to meet requirements of simultaneously outputting projection and inputting photographing.

(II) A flexible screen mobile terminal is provided, where a camera component is mounted to a first terminal auxiliary body which is rotatable, so that multi-angle adjustment of the camera component can be realized and flexibility of the camera component can be improved, so as to meet requirements of a user for photographing from different angles.

(III) A flexible screen mobile terminal is provided, where a micro projection module is mounted to a second terminal auxiliary body which is rotatable, so that multi-angle adjustment of the micro projection module can be realized and flexibility of the micro projection module can be improved, so as to meet requirements of a user for projection from different angles.

(IV) A flexible screen mobile terminal is provided, where a terminal main body, a first terminal auxiliary body and a second terminal auxiliary body serve as a fixed support when a camera component and a micro projection module are used, which avoids inconvenience of providing fixed support additionally and improves use convenience of the camera component and the micro projection module.

### BRIEF DESCRIPTION OF DRAWINGS

### DESCRIPTION OF DRAWINGS

FIG. 1 is a isometric view of a flexible screen mobile terminal in an embodiment;
FIG. 2 is a isometric view from another point of view of a flexible screen mobile terminal in an embodiment;
FIG. 3 is a isometric view of a flexible screen mobile terminal in a separated state in an embodiment;

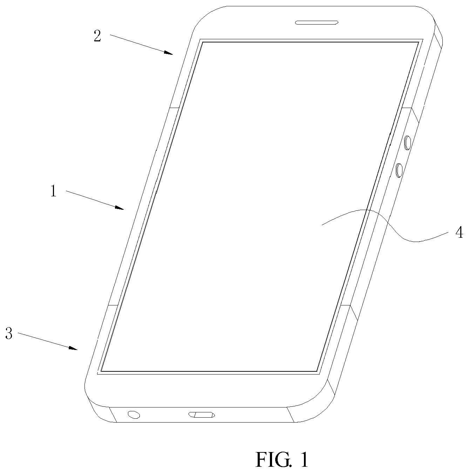

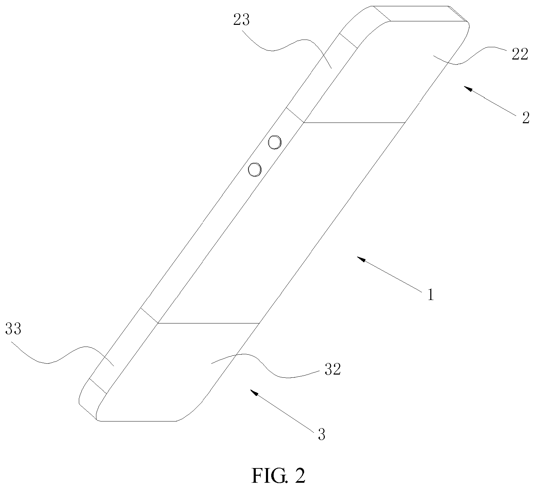

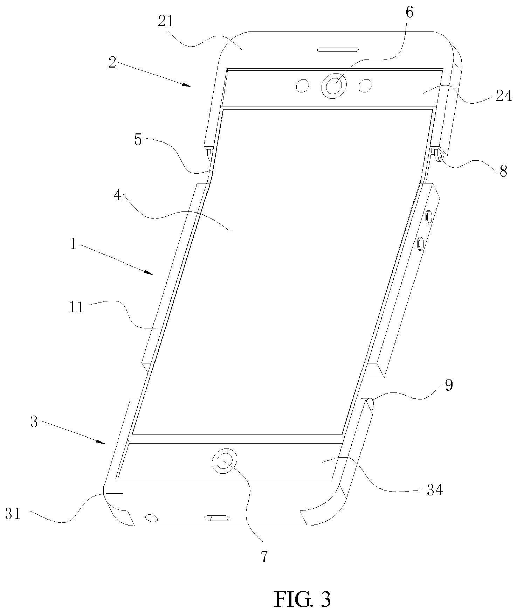

In FIGs. 1-3:
1. terminal main body; 11. first main body surface;
2. first terminal auxiliary body; 21. first auxiliary body surface; 22. second auxiliary body surface; 23. first auxiliary body frame; 24. first cover portion;
3. second terminal auxiliary body; 31. third auxiliary body surface; 32. fourth auxiliary body surface; 33. second auxiliary body frame; 34. second cover portion;
4. flexible screen;
5. screen support;
6. camera component;
7. micro projection module;
8. first coupling components;
9. second coupling components.

### PREFERRED EMBODIMENTS OF THE INVENTION

### PREFERRED IMPLEMENTATION MANNER OF THE INVENTION

The technical solutions of the present invention are further illustrated below in combination with accompanying drawings and specific implementation manners.

As shown in FIGs. 1-3, in an embodiment, a flexible screen mobile terminal which is a flexible screen mobile terminal with both ends being bendable includes:
a terminal main body 1, having a first main body surface 11 for mounting a flexible screen 4;
a first terminal auxiliary body 2, disposed at one end of the terminal main body 1, and having a first auxiliary body surface 21 for mounting the flexible screen 4;
a second terminal auxiliary body 3, disposed at one end of the terminal main body 1 away from the first terminal auxiliary body 2, and having a third auxiliary body surface 31 for mounting the flexible screen 4;
the flexible screen 4, lapped jointly on the first main body surface 11, the first auxiliary body surface 21 and the third auxiliary body surface 31, wherein one end of the flexible screen 4 is coupled to and movable relative to the first auxiliary body surface 21, and the other end of the flexible screen 4 is coupled to and movable relative to the third auxiliary body surface 31, and wherein
the first terminal auxiliary body 2 is relatively rotatably coupled to the terminal main body 1, and the second terminal auxiliary 3 is relatively rotatably coupled to the terminal main body 1;
a camera component 6, mounted to the first terminal auxiliary body 2; and
a micro projection module 7, mounted to the second terminal auxiliary body 3.
In this embodiment, the terminal main body 1 and the first terminal auxiliary body 2 can rotate individually around an axis parallel to a plane in which the flexible screen 4 is located; the terminal main body 1 and the second terminal auxiliary body 3 can rotate individually around an axis parallel to the plane in which the flexible screen 4 is located.

In this embodiment, the camera component 6 is mounted to the first terminal auxiliary body 2 which can be rotated individually, and the micro projection module 7 is mounted to the second terminal auxiliary body 3 which can be rotated individually, so that angle adjustment of the camera component 6 and the micro projection module 7 can be implemented individually, enabling the mobile terminal to meet requirements of simultaneously outputting projection and inputting photographing. In addition, the camera component 6 is mounted to the first terminal auxiliary body 2 which is rotatable, so that multi-angle adjustment of camera component 6 can be realized and flexibility of the camera component 6 can be improved, so as to meet requirements of a user for photographing from different angles; the micro projection module 7 is mounted to the second terminal auxiliary body 3 which is rotatable, so that the multi-angle adjustment of micro projection module 7 can be realized and flexibility of the micro projection module 7 can be improved, so as to meet requirements of a user for projection from different angles. In this embodiment, a mobile terminal structure with both ends being bendable enables the terminal main body 1, the first terminal auxiliary body 2 and the second terminal auxiliary body 3 to serve as a fixed support when the camera component 6 and the micro projection module 7 are used, which avoids inconvenience of providing fixed support additionally and improves use convenience of the camera component 6 and the micro projection module 7.

In an example, not according to the invention and present for illustration purposes only, the camera component 6 may include a lens and a flashlight disposed at one side of the lens.

In an example, not according to the invention and present for illustration purposes only, the terminal main body 1, the first terminal auxiliary body 2 and the second terminal auxiliary body 3 may be shaped like a rectangular solid, and the first main body surface 11, the first auxiliary body surface 21 and the third auxiliary body surface 31 may be in a rectangular shape, where an area of the first main body surface 11 is greater than that of the first auxiliary body surface 21, and an area of the first main body surface 11 may be greater than that of the third auxiliary body surface 31.

In an example, not according to the invention and present for illustration purposes only, the signal between the terminal main body 1 and the first terminal auxiliary body 2 may be transmitted through a flat cable; signal between the terminal main body 1 and the second terminal auxiliary body 3 may be transmitted through a flat cable.

A photographing trigger component for triggering the camera component 6 is disposed at a position where the terminal main body 1 and the first terminal auxiliary body 2 are coupled to each other; a projection trigger component for triggering the micro projection module 7 is disposed at a position where the terminal main body 1 and the second terminal auxiliary body 3 are coupled to each other.

In an example, not according to the invention and present for illustration purposes only, the photographing trigger component may be a mechanical button or a light-sensitive sensor. In an example, not according to the invention and present for illustration purposes only, the projection trigger component may be a mechanical button or a light-sensitive sensor.

First coupling components 8 are disposed at a position where the terminal main body 1 and the first terminal auxiliary body 2 are coupled to each other, and the first coupling components 8 are a first buckle and a first slot that mate with each other and are selectively coupled to or separated from each other; the first buckle is disposed at the terminal main body 1, and the first slot is disposed at the first terminal auxiliary body 2; or the first buckle is disposed at the first terminal auxiliary body 2, and the first slot is disposed at the terminal main body 1. The photographing trigger component is disposed at an end portion of the first buckle, or the photographing trigger component is disposed at a bottom portion of the first slot.

In this embodiment, the first buckle is disposed at the first terminal auxiliary body 2, the first slot is disposed at the terminal main body 1, and the photographing trigger component is disposed at an end portion of the first buckle. When the intercoupled terminal main body 1 and first terminal auxiliary body 2 are separated from each other, the first buckle is disengaged from the first slot, and the photographing trigger component is also disengaged from the first slot. In this case, the photographing trigger component is triggered to turn on the camera component 6, enabling the camera component 6 to be in an operation state. When the terminal main body 1 and the first terminal auxiliary body 2 in a separated state are coupled to each other, the first buckle is inserted into the first slot, and the photographing trigger component is also inserted into the first slot. In this case, the photographing trigger component is triggered to turn off camera component 6, enabling the camera component 6 to be in a standby state.

Second coupling components 9 are disposed at a position where the terminal main body 1 and the second terminal auxiliary body 3 are coupled to each other, and the second coupling components 9 are a second buckle and a second slot that mate with each other and are selectively coupled to or separated from each other; the second buckle is disposed at the terminal main body 1, and the second slot is disposed at the second terminal auxiliary body 3; or, the second buckle is disposed at the second terminal auxiliary body 3, and the second slot is disposed at the terminal main body 1. The projection trigger component is disposed at an end portion of the second buckle, or the projection trigger component is disposed at a bottom portion of the second slot.

In this embodiment, the second buckle is disposed at the second terminal auxiliary body 3, the second slot is disposed at the terminal main body 1, and the projection trigger component is disposed at an end portion of the second buckle. When the intercoupled terminal main body 1 and second terminal auxiliary body 3 are separated from each other, the second buckle is disengaged from the second slot, and the projection trigger component is also disengaged from the second slot. In this case, the projection trigger component is triggered to turn on micro projection module 7, enabling the camera component 7 to be in an operation state. When the terminal main body 1 and the second terminal auxiliary body 3 in a separated state are coupled to each other, the second buckle is inserted into the second slot, and the projection trigger component is also inserted into the second slot. In this case, the projection trigger component is triggered to turn off camera component 7, enabling the camera component 7 to be in a standby state.

A screen support 5 for supporting the flexible screen 4 is disposed outside of the flexible screen 4, wherein one end of the screen support 5 is coupled to and slidable relative to the first terminal auxiliary body 2, and the other end of the screen support 5 is coupled to and slidable relative to the second terminal auxiliary body 3. The screen support 5 is made of a flexible material which can be bent repeatedly.

The flexible screen 4 is disposed inside of a frame of the screen support 5, and outside of the frame of the screen support 5 is coupled to the terminal main body 1, the first terminal auxiliary body 2 and the second terminal auxiliary body 3.

In this embodiment, the camera component 6 is mounted to the first auxiliary body surface 21.

Specifically, a first cover portion 24 overlapped with the flexible screen 4 selectively is mounted to the first auxiliary body surface 21 of the first terminal auxiliary body 2, wherein the camera component 6 is mounted to the first cover portion 24 of the first auxiliary body surface 21 and selectively hidden between the first terminal auxiliary body 2 and the flexible screen 4.

Specifically, "selectively hidden" refers to be concealed or exposed. More specifically, "selectively hidden" refers to that the camera component 6 and the micro projection module 7 are concealed behind back side of the flexible screen 4 when they are not used, and the camera component 6 and the micro projection module 7 are exposed from one side of the flexible screen 4 when they are used.

When the terminal main body 1 and the first terminal auxiliary body 2 are coupled to each other, the first cover portion 24 is overlapped with the flexible screen 4 and hidden behind back side of the flexible screen 4. In this case, the camera component 6 is hidden behind back side of the flexible screen 4 and the camera component 6 is in a standby state. When the terminal main body 1 and the first terminal auxiliary body 2 are separated from each other, the first cover portion 24 is exposed from one side of the flexible screen 4. In this case, the camera component 6 is exposed from one side of the flexible screen 4 and the camera component 6 is in an operation state.

In this embodiment, the micro projection module 7 is mounted to the third auxiliary body surface 31.

Specifically, a second cover portion 34 overlapped with the flexible screen 4 selectively is mounted to the third auxiliary body surface 31 of the second terminal auxiliary body 3, wherein the micro projection module 7 is mounted to the second cover portion 34 of the third auxiliary body surface 31 and selectively hidden between the second terminal auxiliary body 3 and the flexible screen 4.

When the terminal main body 1 and the second terminal auxiliary body 3 are coupled to each other, the second cover portion 34 is overlapped with the flexible screen 4 and hidden behind back side of the flexible screen 4. In this case, the micro projection module 7 is hidden behind back side of the flexible screen 4 and the camera component 7 is in a standby state. When the terminal main body 1 and the second terminal auxiliary body 3 are separated from each other, the second cover portion 34 is exposed from one side of the flexible screen 4. In this case, the micro projection module 7 is exposed from one side of the flexible screen 4 and the micro projection module 7 is in an operation state.

In an example , the first terminal auxiliary body 2 further has a second auxiliary body surface 22 opposite to the first auxiliary body surface 21, and the camera component is mounted to the second auxiliary body surface 22.

In another example, the second terminal auxiliary body 3 further has a fourth auxiliary body surface 32 opposite to the third auxiliary body surface 31, and the micro projection module is mounted to the fourth auxiliary body surface 32.

In another example, a first auxiliary body frame 23 is disposed between the first auxiliary body surface 21 and the second auxiliary body surface 22, and the camera component is mounted to the first auxiliary body frame 23.

In another example, a second auxiliary body frame 33 is disposed between the third auxiliary body surface 31 and the fourth auxiliary body surface 32, and the camera component is mounted to the second auxiliary body frame 33.

Terms "first", "second", "third" and "fourth" in the present application are merely for distinguishing objects in description, without representing any special meaning.

## Claims

1. A flexible screen mobile terminal with both ends being bendable, comprising:
a terminal main body (1), having a first main body surface (11) for mounting a flexible screen (4);
a first terminal auxiliary body (2), disposed at one end of the terminal main body (1), and having a first auxiliary body surface (21) for mounting the flexible screen (4);
a second terminal auxiliary body (3), disposed at one end of the terminal main body (1) away from the first terminal auxiliary body (2), and having a third auxiliary body surface (31) for mounting the flexible screen (4);
the flexible screen (4), lapped jointly on the first main body surface (11), the first auxiliary body surface (21) and the third auxiliary body surface (31);
a screen support (5) for supporting the flexible screen (4) and disposed outside the flexible screen (4); and
a camera component (6), mounted to the first auxiliary body surface (21) of the first terminal auxiliary body (2);
wherein one end of the flexible screen (4) is coupled to the first auxiliary body surface (21), and the other end of the flexible screen (4) is coupled to the third auxiliary body surface (31), and
wherein the first terminal auxiliary body (2) is relatively rotatably coupled to the terminal main body (1), and the second terminal auxiliary body (3) is relatively rotatably coupled to the terminal main body (1);
**characterized in that**
the end of the flexible screen (4) coupled to the first auxiliary body surface (21) is slidable relative to the first auxiliary body surface (21), and the other end of the flexible screen (4) coupled to the third auxiliary body surface (31) is slidable relative to the third auxiliary body surface (31); and
the flexible screen mobile terminal comprises a micro projection module (7), mounted to the third auxiliary body surface (31) of the second terminal auxiliary body (3),
wherein
a first cover portion (24) overlapped with the flexible screen (4) selectively is mounted to the first auxiliary body surface (21), and the camera component (6) is mounted to the first cover portion (24) of the first auxiliary body surface (21) and selectively hidden between the first terminal auxiliary body (2) and the flexible screen (4); and/or
a second cover portion (34) overlapped with the flexible screen (4) selectively is mounted to the third auxiliary body surface (31), and the micro projection module (7) is mounted to the second cover portion (34) of the third auxiliary body surface (31) and selectively hidden between the second terminal auxiliary body (3) and the flexible screen (4).

2. The flexible screen mobile terminal with both ends being bendable of claim 1, wherein the terminal main body (1) and the first terminal auxiliary body (2) are coupled to each other by first coupling components (8), and the first coupling components (8) are a first buckle and a first slot that mate with each other and are selectively coupled to or separated from each other; and/or
the terminal main body (1) and the second terminal auxiliary body (3) are coupled to each other by second coupling components (9), and the second coupling components (9) are a second buckle and a second slot that mate with each other and are selectively coupled to or separated from each other.

3. The flexible screen mobile terminal with both ends being bendable of claim 1 or 2, wherein a photographing trigger component for triggering the camera component (6) is disposed at a position where the terminal main body (1) and the first terminal auxiliary body (2) are coupled to each other; and/or,
a projection trigger component for triggering the micro projection module (7) is disposed at a position where the terminal main body (1) and the second terminal auxiliary body (3) are coupled to each other.

4. The flexible screen mobile terminal with both ends being bendable of claim 3, wherein the photographing trigger component is configured to be triggered to turn on the camera component (6), when the intercoupled terminal main body (1) and first terminal auxiliary body (2) are separated from each other; or,
the photographing trigger component is configured to be triggered to turn off the camera component (6), when the terminal main body (1) and the first terminal auxiliary body (2) in a separated state are coupled to each other.

5. The flexible screen mobile terminal of claim 3, wherein the projection trigger component is configured to be triggered to turn on the micro projection module (7), when the intercoupled terminal main body (1) and second terminal auxiliary body (3) are separated from each other; or,
the projection trigger component is configured to be triggered to turn off the micro projection module (7), when the terminal main body (1) and the second terminal auxiliary body (3) in a separated state are coupled to each other.

6. The flexible screen mobile terminal with both ends being bendable of claim 1 or 2, wherein outside of the frame of the screen support (5) is coupled to the terminal main body (1), the first terminal auxiliary body (2) and the second terminal auxiliary body (3).

7. The flexible screen mobile terminal with both ends being bendable of claim 6, wherein one end of the screen support (5) is slidable relative to the first terminal auxiliary body (2), and the other end of the screen support (5) is slidable relative to the second terminal auxiliary body (3).

## Patentansprüche

1. Mobiles Endgerät mit flexiblem Bildschirm, bei dem beide Enden biegbar sind, das Folgendes aufweist:
einen Endgerät-Hauptkörper (1), der eine erste Hauptkörperoberfläche (11) zum Anbringen eines flexiblen Bildschirms (4) aufweist;
einen ersten Endgerät-Hilfskörper (2), der an einem Ende des Endgerät-Hauptkörpers (1) angeordnet ist und
eine erste Hilfskörperoberfläche (21) zum Anbringen des flexiblen Bildschirms (4) aufweist;
einen zweiten Endgerät-Hilfskörper (3), der an einem Ende des Endgerät-Hauptkörpers (1) entfernt von dem ersten Endgerät-Hilfskörper (2) angeordnet ist und eine dritte Hilfskörperoberfläche (31) zum Anbringen des flexiblen Bildschirms (4) aufweist;
den flexiblen Bildschirm (4), der gemeinsam die erste Hauptkörperoberfläche (11), die erste Hilfskörperoberfläche (21) und die dritte Hilfskörperoberfläche (31) überdeckt;
einen Bildschirmträger (5) zum Tragen des flexiblen Bildschirms (4), der außerhalb des flexiblen Bildschirms (4) angeordnet ist; und
eine Kamerakomponente (6), die auf der ersten Hilfskörperoberfläche (21) des ersten Endgerät-Hilfskörpers (2) angebracht ist;
wobei ein Ende des flexiblen Bildschirms (4) mit der ersten Hilfskörperoberfläche (21) gekoppelt ist und das andere Ende des flexiblen Bildschirms (4) mit der dritten Hilfskörperoberfläche (31) gekoppelt ist und wobei der erste Endgerät-Hilfskörper (2) relativ drehbar mit dem Endgerät-Hauptkörper (1) gekoppelt ist und der zweite Endgerät-Hilfskörper (3) relativ drehbar mit dem Endgerät-Hauptkörper (1) gekoppelt ist;
**dadurch gekennzeichnet, dass** das Ende des flexiblen Bildschirms (4), das mit der ersten Hilfskörperoberfläche (21) gekoppelt ist, verschiebbar relativ zur ersten Hilfskörperoberfläche (21) ist und das andere Ende des flexiblen Bildschirms (4), das mit der dritten Hilfskörperoberfläche (31) gekoppelt ist, verschiebbar relativ zur dritten Hilfskörperoberfläche (31) ist; und
das mobile Endgerät mit flexiblem Bildschirm ein Mikroprojektionsmodul (7) aufweist, das an der dritten Hilfskörperoberfläche (31) des zweiten Endgerät-Hilfskörpers (3) angebracht ist, wobei
ein erster Abdeckungsabschnitt (24), der wahlweise mit dem flexiblen Bildschirm (4) überlappt, an der ersten Hilfskörperoberfläche (21) angebracht ist und die Kamerakomponente (6) am ersten Abdeckungsabschnitt (24) der ersten Hilfskörperoberfläche (21) angebracht ist und wahlweise zwischen dem ersten Endgerät-Hilfskörper (2) und dem flexiblen Bildschirm (4) verborgen ist; und/oder
ein zweiter Abdeckungsabschnitt (34), der wahlweise mit dem flexiblen Bildschirm (4) überlappt, an der dritten Hilfskörperoberfläche (31) angebracht ist und das Mikroprojektionsmodul (7) am zweiten Abdeckungsabschnitt (34) der dritten Hilfskörperoberfläche (31) angebracht ist und wahlweise zwischen dem zweiten Endgerät-Hilfskörper (3) und dem flexiblen Bildschirm (4) verborgen ist.

2. Mobiles Endgerät mit flexiblem Bildschirm, bei dem beide Enden biegbar sind, nach Anspruch 1, wobei der Endgerät-Hauptkörper (1) und der erste Endgerät-Hilfskörper (2) durch erste Kopplungskomponenten (8) miteinander gekoppelt sind und die ersten Kopplungskomponenten (8) eine erste Schließe und ein erster Schlitz sind, die zusammenpassen und wahlweise miteinander gekoppelt oder voneinander getrennt werden können; und/oder
der Endgerät-Hauptkörper (1) und der zweite Endgerät-Hilfskörper (3) durch zweite Kopplungskomponenten (9) miteinander gekoppelt sind und die zweiten Kopplungskomponenten (9) eine zweite Schließe und ein zweiter Schlitz sind, die zusammenpassen und wahlweise miteinander gekoppelt oder voneinander getrennt werden können.

3. Mobiles Endgerät mit flexiblem Bildschirm, bei dem beide Enden biegbar sind, nach Anspruch 1 oder 2, wobei eine Fotografie-Auslösekomponente zum Auslösen der Kamerakomponente (6) an einer Position angeordnet ist, an der der Endgerät-Hauptkörper (1) und der erste Endgerät-Hilfskörper (2) miteinander gekoppelt sind; und/oder,
eine Projektions-Auslösekomponente zum Auslösen des Mikroprojektionsmoduls (7) an einer Position angeordnet ist, an der der Endgerät-Hauptkörper (1) und der zweite Endgerät-Hilfskörper (3) miteinander gekoppelt sind.

4. Mobiles Endgerät mit flexiblem Bildschirm, bei dem beide Enden biegbar sind, nach Anspruch 3, wobei die Fotografie-Auslösekomponente zum Auslösen des Einschaltens der Kamerakomponente (6) konfiguriert ist, wenn die miteinander gekoppelten Endgerät-Hauptkörper (1) und erster Endgerät-Hilfskörper (2) voneinander getrennt werden; oder,
die Fotografie-Auslösekomponente zum Auslösen des Ausschaltens der Kamerakomponente (6) konfiguriert ist, wenn die sich in einem getrennten Zustand befindlichen Endgerät-Hauptkörper (1) und erster Endgerät-Hilfskörper (2) miteinander gekoppelt werden.

5. Mobiles Endgerät mit flexiblem Bildschirm nach Anspruch 3, wobei die Projektions-Auslösekomponente zum Auslösen des Einschaltens des Mikroprojektionsmoduls (7) konfiguriert ist, wenn die miteinander gekoppelten Endgerät-Hauptkörper (1) und zweiter Endgerät-Hilfskörper (3) voneinander getrennt werden; oder,
die Projektions-Auslösekomponente zum Auslösen des Ausschaltens des Mikroprojektionsmoduls (7) konfiguriert ist, wenn die sich in einem getrennten Zustand befindlichen Endgerät-Hauptkörper (1) und zweiter Endgerät-Hilfskörper (3) miteinander gekoppelt werden.

6. Mobiles Endgerät mit flexiblem Bildschirm, bei dem beide Enden biegbar sind, nach Anspruch 1 oder 2, wobei außerhalb des Rahmens des Bildschirmträgers (5) der erste Endgerät-Hilfskörper (2) und der zweite Endgerät-Hilfskörper (3) an den Endgerät-Hauptkörper (1) gekoppelt sind.

7. Mobiles Endgerät mit flexiblem Bildschirm, bei dem beide Enden biegbar sind, nach Anspruch 6, wobei ein Ende des Bildschirmträgers (5) verschiebbar relativ zum ersten Endgerät-Hilfskörper (2) ist und das andere Ende des Bildschirmträgers (5) verschiebbar relativ zum zweiten Endgerät-Hilfskörper (3) ist.

## Revendications

1. Terminal mobile à écran souple dont les deux extrémités sont pliables, comprenant :
un corps principal de terminal (1), ayant une première surface de corps principal (11) destinée à monter un écran souple (4) ;
un premier corps auxiliaire de terminal (2), disposé à une extrémité du corps principal de terminal (1) et ayant une première surface de corps auxiliaire (21) destinée à monter l'écran souple (4) ;
un second corps auxiliaire de terminal (3), disposé à une extrémité du corps principal de terminal (1) distante du premier corps auxiliaire de terminal (2) et ayant une troisième surface de corps auxiliaire (31) destinée à monter l'écran souple (4) ;
l'écran souple (4) chevauchant conjointement la première surface de corps principale (11), la première surface de corps auxiliaire (21) et la troisième surface de corps auxiliaire (31) ;
un support d'écran (5) destiné à supporter l'écran souple (4) et disposé à l'extérieur de l'écran souple (4) ; et
un composant de caméra (6) monté sur la première surface de corps auxiliaire (21) du premier corps auxiliaire de terminal (2) ;
dans lequel une extrémité de l'écran souple (4) est couplée à la première surface de corps auxiliaire (21) et l'autre extrémité de l'écran souple (4) est couplée à la troisième surface de corps auxiliaire (31), et
dans lequel le premier corps auxiliaire de terminal (2) est couplé en rotation relative au corps principal de terminal (1), et le second corps auxiliaire de terminal (3) est couplé en rotation relative au corps principal de terminal (1) ;
**caractérisé en ce que**
l'extrémité de l'écran souple (4) couplée à la première surface de corps auxiliaire (21) peut coulisser par rapport à la première surface de corps auxiliaire (21) et l'autre extrémité de l'écran souple (4) couplée à la troisième surface de corps auxiliaire (31) peut coulisser par rapport à la troisième surface de corps auxiliaire (31) ; et
le terminal mobile à écran souple comprend un module de micro-projection (7), monté sur la troisième surface de corps auxiliaire (31) du second corps auxiliaire de terminal (3),
dans lequel
une première partie de couvercle (24) chevauchée par l'écran souple (4) est montée de façon sélective sur la première surface de corps auxiliaire (21), et le composant de caméra (6) est monté sur la première partie de couvercle (24) de la première surface de corps auxiliaire (21) et caché de façon sélective entre le premier corps auxiliaire de terminal (2) et l'écran souple (4) ; et/ou
une seconde partie de couvercle (34) chevauchée par l'écran souple (4) est montée de façon sélective sur la troisième surface de corps auxiliaire (31), et le module de micro-projection (7) est monté sur la seconde partie de couvercle (34) de la troisième surface de corps auxiliaire (31) et caché de façon sélective entre le second corps auxiliaire de terminal (3) et l'écran souple (4) .

2. Terminal mobile à écran souple dont les deux extrémités sont pliables selon la revendication 1, dans lequel le corps principal de terminal (1) et le premier corps auxiliaire de terminal (2) sont couplés l'un à l'autre au moyen de premiers composants de couplage (8), et les premiers composants de couplage (8) sont constitués d'une première boucle et d'une première fente qui correspondent l'une à l'autre et sont couplées ou séparées l'une de l'autre de façon sélective ; et/ou
le corps principal de terminal (1) et le second corps auxiliaire de terminal (3) sont couplés l'un à l'autre au moyen de seconds composants de couplage (9), et les seconds composants de couplage (9) sont constitués d'une seconde boucle et d'une seconde fente qui correspondent l'une à l'autre et sont couplées ou séparées l'une de l'autre de façon sélective.

3. Terminal mobile à écran souple dont les deux extrémités sont pliables selon la revendication 1 ou 2, dans lequel un composant de déclenchement de photographie destiné à déclencher le composant de caméra (6) est disposé à une position dans laquelle le corps principal de terminal (1) et le premier corps auxiliaire de terminal (2) sont couplés l'un à l'autre ; et/ou
un composant de déclenchement de projection destiné à déclencher le module de micro-projection (7) est disposé à une position dans laquelle le corps principal de terminal (1) et le second corps auxiliaire de terminal (3) sont couplés l'un à l'autre.

4. Terminal mobile à écran souple dont les deux extrémités sont pliables selon la revendication 3, dans lequel le composant de déclenchement de photographie est configuré pour être déclenché pour mettre sous tension le composant de caméra (6), lorsque le corps principal de terminal (1) et le premier corps auxiliaire de terminal (2) couplés entre eux sont séparés l'un de l'autre ; ou
le composant de déclenchement de photographie est configuré pour être déclenché pour mettre hors tension le composant de caméra (6), lorsque le corps principal de terminal (1) et le premier corps auxiliaire de terminal (2) dans un état séparé sont couplés l'un à l'autre.

5. Terminal mobile à écran souple selon la revendication 3, dans lequel le composant de déclenchement de projection est configuré pour être déclenché pour mettre sous tension le module de micro-projection (7) lorsque le corps principal de terminal (1) et le second corps auxiliaire de terminal (3) couplés entre eux sont séparés l'un de l'autre ; ou
le composant de déclenchement de projection est configuré pour être déclenché pour mettre hors tension le module de micro-projection (7) lorsque le corps principal de terminal (1) et le second corps auxiliaire de terminal (3) dans un état séparé sont couplés l'un à l'autre.

6. Terminal mobile à écran souple dont les deux extrémités sont pliables selon la revendication 1 ou 2, dans lequel l'extérieur du cadre du support d'écran (5) est couplé au corps principal de terminal (1), au premier corps auxiliaire de terminal (2) et au second corps auxiliaire de terminal (3).

7. Terminal mobile à écran souple dont les deux extrémités sont pliables selon la revendication 6, dans lequel une extrémité du support d'écran (5) peut coulisser par rapport au premier corps auxiliaire de terminal (2) et l'autre extrémité du support d'écran (5) peut coulisser par rapport au second corps auxiliaire de terminal (3).
